# EUROPÄISCHE PATENTSCHRIFT

(11) **EP 2 837 268 B1**
(45) Veröffentlichungstag und Bekanntmachung des Hinweises auf die Patenterteilung: **10.03.2021**
(21) Anmeldenummer: 13715967.9
(22) Anmeldetag: 10.04.2013
(51) Int. Cl.: H05B 47/00

(54) **BELEUCHTUNGSSYSTEM UND STEUEREINHEIT HIERFÜR**
LIGHTING SYSTEM AND CONTROL UNIT FOR SAME
SYSTÈME D'ÉCLAIRAGE ET SON MODULE DE COMMANDE

(30) Priorität: 12.04.2012 DE 102012205964
(43) Veröffentlichungstag der Anmeldung: 18.02.2015
(73) Patentinhaber: Zumtobel Lighting GmbH, 6850 Dornbirn (AT)
(72) Erfinder: FLATZ, Daniel, A-6890 Lustenau (AT)
(74) Vertreter: Thun, Clemens
(86) Internationale Anmeldenummer: PCT/EP2013/057461
(87) Internationale Veröffentlichungsnummer: WO 2013/153097

(56) Entgegenhaltungen:
- WO-A1-2009/156952
- WO-A1-2011/120065
- DE-A1-102006 046 489
- GB-A- 2 467 196
- US-A1- 2009 322 251
- US-A1- 2010 277 107
- US-A1- 2010 327 780
- US-A1- 2011 043 124
- US-A1- 2011 118 890
- US-A1- 2011 127 916
- US-A1- 2011 140 611
- US-A1- 2011 260 652
- US-A1- 2012 038 281

## Beschreibung

Die vorliegende Erfindung betrifft ein Beleuchtungssystem mit mindestens einer Steuereinheit, welche dazu ausgebildet ist, den ihr zugeordneten Leuchten Steuerbefehle zu übermitteln. Bei den Steuerbefehlen kann es sich insbesondere um Befehle entsprechend dem DALI- und/oder DSI-Standard handeln. Ferner betrifft die vorliegende Erfindung ein Verfahren zum Ansteuern von Betriebsgeräten in einem Beleuchtungssystem.

Beleuchtungssysteme, bei denen das Verhalten mehrerer verteilt angeordneter Leuchten aufeinander abgestimmt wird, sind bereits bekannt und werden vielfach eingesetzt, um insgesamt die Beleuchtung aber auch den Energieverbrauch in einem Gebäude zu optimieren. So wird einerseits durch ein einheitliches Verhalten der Leuchten das gesamte Erscheinungsbild verbessert, andererseits kann dadurch, dass z.B. eine Einstellung der Helligkeit der verschiedenen Leuchten in Abhängigkeit von dem zur Verfügung stehenden Tageslicht erfolgt, der Energieverbrauch reduziert werden. Darüber hinaus kann beispielsweise mithilfe von Anwesenheitssensoren die Beleuchtung auch automatisiert davon abhängig eingestellt werden, ob sich in einem bestimmten Bereich Personen aufhalten oder nicht.

Größere Beleuchtungssysteme beruhen generell auf dem Prinzip, den Leuchten Steuerbefehle zu übermitteln, welche dann von den entsprechenden Betriebsgeräten der Leuchten in geeigneter Weise umgesetzt werden. Während es früher üblich war, analoge Signale - beispielsweise eine variable Gleichspannung von 1 bis 10 Volt - zur Helligkeitssteuerung zu übermitteln, ist es nunmehr üblich, Steuerbefehle in digitaler Form zu übertragen. Die hierdurch realisierte Kommunikation zwischen Steuereinheit und Lampenbetriebsgerät wird nicht nur verbessert, es stehen auch vielfältigere Möglichkeiten zur Ansteuerung der Leuchten bzw. allgemein zur Kommunikation zur Verfügung. In letzter Zeit hat sich beispielsweise der sogenannte DALI- (Digital Adressable Lighting Interface) Standard vielfach durchgesetzt. Es handelt sich hierbei um ein Kommunikationsprotokoll zur Datenübermittlung insbesondere zur Helligkeitssteuerung von Leuchten, welches nicht nur die Übermittlung von Befehlen zu den Leuchten hin ermöglicht sondern darüber hinaus auch die Möglichkeit eröffnet, im Rahmen von Statusabfragen den Betriebszustand einzelner Leuchten abzufragen und zu erfassen. Fehlzustände und Defekte einzelner Teilnehmer des Beleuchtungssystems können auf diesem Wege sehr einfach und effektiv erkannt werden.

Die Übermittlung der digitalen Steuerbefehle erfolgt bei Systemen entsprechend dem DALI-Standard über eine spezielle bzw. separate, von der allgemeinen Stromversorgung getrennte Datenleitung, den sogenannten DALI-Bus. Auch bei anderen Beleuchtungssystemen, welche eine zentrale Ansteuerung von verteilt angeordneten Leuchten ermöglichen, findet in der Regel eine Signalübermittlung über eine getrennte Datenleitung statt. Zwar sind auch Systeme bekannt, bei denen mithilfe des sogenannten Powerline Carrier-Verfahrens Steuerinformationen über die zur Stromversorgung vorgesehenen Leitungen übermittelt werden, allerdings handelt es sich hierbei um spezielle Lösungen, die für den generellen Einsatz in größeren Gebäuden eher weniger gut geeignet sind.

Das Verlegen einer separaten Leitung zur Übermittlung der Daten oder Steuerbefehle stellt dann kein Problem dar, wenn dies von vornherein geplant ist und dementsprechend bereits bei der Erstellung z.B. eines Gebäudes erfolgt. Soll hingegen zu einem späteren Zeitpunkt die Beleuchtung eines Gebäudes derart aktualisiert werden, dass zusätzlich zu dem bisherigen einfachen Ein- und Ausschalten der Leuchten nunmehr auch eine komfortable Helligkeitssteuerung ermöglicht wird, so führt dies immer zu einem extrem hohen Aufwand, da nachträglich separate Leitungen für die Signalübermittlung verlegt werden müssen. Oftmals ist der hiermit verbundene Aufwand derart hoch, dass ein entsprechendes Umrüsten der Beleuchtung auf eine komfortable digitale Ansteuerung der Leuchten nicht rentabel ist. In anderen Fällen wiederum ist das Verlegen zusätzlicher Datenübertragungsleitungen gar nicht möglich oder nicht zulässig, beispielsweise wenn es sich unter Denkmalschutz stehende Gebäude handelt.

Da trotzallem die Tendenz dahingehend besteht, Leuchten hinsichtlich ihres Verhaltens einerseits aufeinander abzustimmen und andererseits im Hinblick auf das zur Verfügung stehende Außenlicht in ihrem Betriebsverhalten zu optimieren, wird vermehrt nach Lösungen gesucht, welche das aufwändige Verlegen von Datenleitungen zum Realisieren komplexerer Beleuchtungssysteme vermeiden.

In diesem Zusammenhang ist beispielsweise aus der US 2011/0127916 A1 ein System zum Steuern von für den Straßenverkehr vorgesehenen Leuchten bekannt, bei dem eine drahtlose Steuerung der Leuchte von einer Zentrale aus erfolgt. Eine Hauptleuchte des Systems ist hierbei für die drahtlose Kommunikation mit der Zentrale verantwortlich und leitet eingehende Befehle wiederum drahtlos an benachbarte Leuchten weiter. Eine ähnliche Lösung ist auch aus der US 2012/0038281 A1 bekannt, wobei hier die verteilt angeordneten Leuchten jeweils eigene Sensoren aufweisen, mit deren Hilfe die Annäherung beispielsweise eines Fahrzeugs erkannt wird. Die Leuchten tauschen die entsprechenden Informationen untereinander aus, so dass sie aufeinander abgestimmt die Beleuchtung einstellen können.

Ferner ist eine drahtlose Beleuchtungssteuerung auch in der US 2011/0260652 A1 beschrieben. Auch die US 2009/322251 A1 bezieht sich auf Beleuchtungsvorrichtungen, speziell auf die Verbesserung einer modularen, gekachelten, Licht-emittierenden Großbildanzeige und deren Ansteuerung insbesondere mit einem verringerten Verdrahtungsaufwand. Dazu werden die einzelnen Module durch eine einzelne elektrische Verbindung (einen bidirektionalen Bus) gekoppelt, durch die sowohl die Stromversorgung als auch der Steuerinformationsfluß erfolgt, wodurch Kosten und Komplexität der Vorrichtung(en) verringert werden.

Weiterhin ist in der US 2011/140611 A1 ein Lichtsteuerungssystem offenbart, unter anderem mit einer Steuereinheit, welche über ein oder mehrere Vorschaltgeräte bzw. Treiber ein oder mehrere Lichtquellen betreibt. Die Steuerung reagiert auf analoge, digitale und/oder DALI-Signale von einer oder mehreren Quellen, z.B. einem mit der Steuereinheit verdrahteten Analog-Sensor und/oder einem ebenfalls verdrahteten Digital-Sensor, um erwünschte oder notwendige Beleuchtungsreaktionen bereitstellen zu können (z.B. Dimmen oder Aufhellen in definiertem vorgegebenem Maße).

Die im Stand der Technik bekannten Lösungen ermöglichen zwar das drahtlose Ansteuern von Leuchten und umgehen damit das Problem der Kabelverlegung, allerdings müssen hierfür alle an dem System beteiligten Leuchten in entsprechender Weise für eine drahtlose Kommunikation ausgebildet sein, was mit einem entsprechend hohen Aufwand verbunden ist, da nicht auf bereits vorhandene Lösungen zurückgegriffen werden kann.

Der vorliegenden Erfindung liegt deshalb die Aufgabe zugrunde, eine entsprechende Lösung anzubieten, die ermöglicht, in einfacher Weise das aufwändige Verlegen von Datenleitungen zum Realisieren komplexerer Beleuchtungssysteme zu vermeiden.

Diese Aufgabe wird durch ein Beleuchtungssystem mit den Merkmalen des Anspruchs 1 sowie durch ein entsprechendes Ansteuerverfahren gemäß Anspruch 6 gelöst.

Vorteilhafte Weiterbildungen der Erfindung sind Gegenstand der abhängigen Ansprüche.

Mit der erfindungsgemäßen Lösung werden ein System und ein Verfahren zur Ansteuerung von Leuchten zur Verfügung gestellt, welches mit einem verhältnismäßig geringen Aufwand realisiert werden kann. Insbesondere dann, wenn ein bereits existierendes Beleuchtungssystem um- bzw. aufgerüstet werden soll, bietet die erfindungsgemäße Lösung deutliche Vorteile, da der Aufwand im Hinblick auf das Verlegen zusätzlicher Leitungen oder dergleichen auf ein Minimum reduziert wird. Die erfindungsgemäße Lösung beruht dabei auf dem Gedanken, dass das Beleuchtungssystem eine oder mehrere Steuereinheiten aufweist, welche jeweils dazu ausgebildet sind, mehreren ihr zugeordneten Leuchten bzw. den Betriebsgeräten der Leuchten Steuerbefehle beispielsweise entsprechend dem DALI-Standard und/oder auch dem bekannten DSI-Standard zu übermitteln. Die Steuerbefehle werden dabei von den Steuereinheiten selbst auf Basis von ihnen zugeführten Steuerinformationen generiert, wobei erfindungsgemäß vorgesehen ist, dass die Steuereinheit diese Steuerinformationen drahtlos empfängt.

Erfindungsgemäß wird also ein Beleuchtungssystem mit zumindest einer Steuereinheit und mehreren der Steuereinheit zugeordneten Betriebsgeräten sowie zumindest einem Sensor vorgeschlagen, wobei die Steuereinheit mit den ihr zugeordneten Betriebsgeräten über eine Datenleitung verbunden und dazu ausgebildet ist, den Betriebsgeräten individuell unter einer jeweiligen Betriebsadresse Steuerbefehle, insbesondere Steuerbefehle entsprechend dem DALI- und/oder DSI-Standard zu übermitteln, wobei die Steuerbefehle auf Basis von der Steuereinheit zugeführten Steuerinformationen generiert werden und erfindungsgemäß vorgesehen ist, dass die Steuereinheit diese Steuerinformationen drahtlos empfängt. Die vorliegende Erfindung ist insbesondere dadurch gekennzeichnet, dass die der Steuereinheit zugeführten Steuerinformationen zumindest teilweise von dem Sensor - insbesondere in Form eines Anwesenheits- oder Helligkeitssensors - stammen und der Sensor eine eigenständige Energieversorgung in Form einer Batterie oder einer Solarzelle aufweist.

Der Grundgedanke des erfindungsgemäßen Konzepts besteht also darin, dass die Steuereinheiten, welche letztendlich für die Ansteuerung der ihr zugeordneten Leuchten bzw. Betriebsgeräte verantwortlich sind, auf Basis von drahtlos übermittelten Informationen die Steuerbefehle generieren. Da die Steuereinheiten üblicherweise zumindest in der Nähe der ihnen zugeordneten Leuchten angeordnet sind, ist der Aufwand zum Erstellen bzw. Verlegen einer Datenleitung von der Steuereinheit zu den Betriebsgeräten hin relativ gering, da nur kurze Distanzen zu überwinden sind. Eine weitere Verdrahtung der Steuereinheit mit anderen Komponenten des Beleuchtungssystems hingegen, insbesondere mit Bedienelementen, einer zentralen Steuereinheit oder dergleichen ist nicht mehr erforderlich und entfällt dementsprechend, was zur Folge hat, dass auf eine generelle Vernetzung der verschiedenen Steuereinheiten bzw. Steuerkomponenten des Beleuchtungssystems mithilfe einer Datenleitung verzichtet werden kann. Der sich ergebende Aufwand beim Umrüsten eines existierenden Beleuchtungssystems hin zu einem Beleuchtungssystem, welches eine digitale Ansteuerung der verschiedenen Leuchten ermöglicht, ist dementsprechend extrem gering. Trotzallem können auch bei der erfindungsgemäßen Lösung alle Vorzüge eines digitalen Steuerungssystems zum Ansteuern von Leuchten genutzt werden.

Weiterbildungen der Erfindung betreffen insbesondere Gedanken, welche einerseits das Ansteuern der Betriebsgeräte innerhalb der einer Steuereinheit zugeordneten Gruppe optimieren und andererseits den Aufwand zur Montage des Systems weiter reduzieren.

So kann ergänzend auch vorgesehen sein, dass zumindest einige weitere Betriebsgeräte, die einer Steuereinheit zugeordnet sind, drahtlos von dieser Steuerbefehle erhalten. Dies ist insbesondere bei Leuchten hilfreich, die sich in besonderen Positionen befinden und bei denen dementsprechend das Verlegen einer Datenleitung nicht sinnvoll oder möglich ist. Diese Leuchten können dann ergänzend mit einem entsprechenden Empfänger versehen oder verbunden sein, der eine drahtlose Kommunikation, beispielsweise über den bekannten Bluetooth-Standard zwischen Steuereinheit und Leuchte ermöglicht.

Wie bereits oben erläutert ermöglicht die erfindungsgemäße Lösung es, den Aufwand zum Verlegen von Datenleitungen zu reduzieren, indem den Steuereinheiten die zum Erstellen der Steuerbefehle benötigten Steuerinformationen drahtlos übermittelt werden. Dabei kann gemäß einem bevorzugten Ausführungsbeispiel vorgesehen sein, dass das System mehrere Steuereinheiten aufweist, wobei dann die einer Steuereinheit zugeführten Steuerinformationen zumindest teilweise auch von einer der anderen Steuereinheiten stammen. Die Steuereinheiten sind hierbei also derart ausgebildet, dass sie untereinander kommunizieren und insbesondere Informationen hinsichtlich ihres Betriebszustands austauschen, um beispielsweise ein generell aufeinander abgestimmtes Verhalten der Leuchten zu gewährleisten. Ergänzend hierzu können allerdings Steuerinformationen auch von einem Sensor, beispielsweise einem Anwesenheit- oder Helligkeitssensor stammen. Diese Informationen werden dann jeweils von der Steuereinheit in entsprechender Weise verarbeitet, um den Betrieb der zugeordneten Leuchten in geeigneter Weise anzupassen. Auch hier ist vorzugsweise vorgesehen, dass der Aufwand zum Montieren des Sensors und zum Integrieren in das Beleuchtungssystem möglichst gering gehalten wird. Da entsprechende Sensoren allerdings oftmals eine spezielle Anordnung innerhalb oder außerhalb eines Gebäudes benötigen, ist das Verlegen von Datenleitungen oder aber auch von Leitungen zur Energieversorgung hier oftmals mit einem besonders hohen Aufwand verbunden. Dementsprechend kann gemäß einem besonders bevorzugten Ausführungsbeispiel auch vorgesehen sein, dass die Sensoren jeweils eine eigenständige Energieversorgung, insbesondere eine Batterie oder dergleichen aufweisen.

Selbstverständlich kann das erfindungsgemäße Beleuchtungssystem auch Bedienelemente aufweisen, welche es einem Benutzer ermöglichen, eine Steuerung der Helligkeit vorzunehmen, beispielsweise vordefinierte Beleuchtungsszenarien aufzurufen oder einfach die Helligkeit generell zu erhöhen oder zu reduzieren. Auch die von einem derartigen Bedienelement stammenden Informationen werden vorzugsweise drahtlos an die Steuereinheiten übermittelt, wobei insbesondere vorgesehen sein kann, dass das Beleuchtungssystem jeweils mehrere Bedienelemente aufweist und diese dazu ausgebildet sind, untereinander Informationen bzgl. der an die Steuereinheiten übermittelten Steuerinformationen auszutauschen. Dies ist insofern relevant, als moderne Bedienelemente oftmals eigene Anzeigen oder Displays aufweisen, über welche der aktuelle Zustand des Beleuchtungssystems bzw. ein von dem Benutzer gewähltes Beleuchtungsszenario angezeigt werden. Durch den Austausch der Informationen untereinander ist sichergestellt, dass alle Bedienelemente jeweils die gleiche Information darstellen und tatsächlich den aktuellen Zustand des Beleuchtungssystems wiedergeben.

Letztendlich kann also mithilfe der erfindungsgemäßen Lösung ein Beleuchtungssystem geschaffen werden, welches hinsichtlich seiner Steuerungsmöglichkeiten und Möglichkeiten zur Einbindung externer Informationen, die beispielsweise von Sensoren oder dergleichen stammen, alle Möglichkeiten eines klassischen, zentral gesteuerten Beleuchtungssystems bietet, wobei allerdings insbesondere der Aufwand zur Montage des Systems im Vergleich zu bisher bekannten Lösungen deutlich reduziert wird.

Nachfolgend soll die Erfindung anhand der beiliegenden Zeichnung näher erläutert werden. Es zeigen:
- Figur 1: schematisch den generellen Aufbau eines erfindungsgemäßen Beleuchtungssystems und
- Figur 2: die Vorgehensweise beim Umrüsten eines existierenden Beleuchtungssystems auf ein System gemäß der vorliegenden Erfindung.

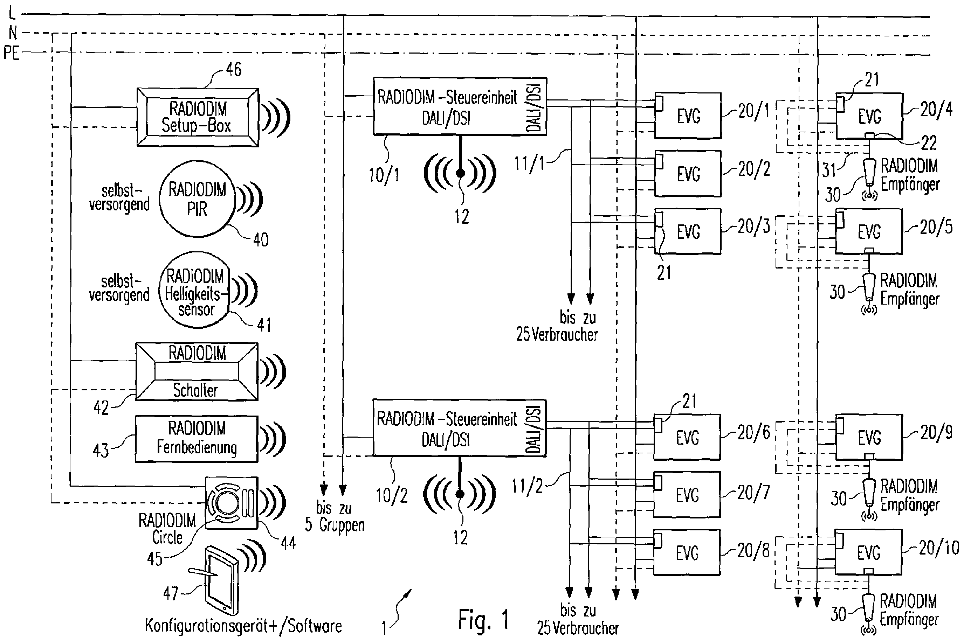

Anhand von Figur 1 soll zunächst der generelle Aufbau eines erfindungsgemäßen Beleuchtungssystems erläutert werden. Insbesondere sollen die in dem System beteiligten Einheiten und deren Zusammenwirken erläutert werden. Anschließend soll anhand eines konkreten Beispiels gezeigt werden, in welcher Weise die erfindungsgemäße Lösung zum Nach- bzw. Umrüsten eines bereits existierenden Beleuchtungssystems genutzt werden kann.

Der Kerngedanke der erfindungsgemäßen Lösung beruht darauf, dass der Aufbau zum Verlegen von Datenleitungen für die Ansteuerung der verschiedenen Einheiten des Systems möglichst gering gehalten werden soll. Insbesondere sollen derartige Leitungen nur dann verlegt werden, wenn dies mit einem vertretbaren Aufwand möglich ist. Im Gegensatz zu bisher bekannten Systemen zeichnet sich dementsprechend das in Figur 1 dargestellte und allgemein mit dem Bezugszeichen 1 versehene System dadurch aus, dass die verschiedenen Einheiten nicht alle über eine gemeinsame Bus- oder Datenleitung miteinander verbunden sind. Auf der anderen Seite sollen die zur Verfügung stehenden Leitungen zur Stromversorgung möglichst effektiv genutzt werden, was letztendlich zur Folge hat, dass nahezu alle Komponenten an die allgemeine Stromversorgung angeschlossen sind. Ausnahmen stellen lediglich einige Einheiten zum Generieren von Steuerinformationen, insbesondere Sensoren dar, welche später noch näher erläutert werden.

Grundsätzlich ist das erfindungsgemäße Beleuchtungssystem 1 derart aufgebaut, dass die einzelnen Leuchten, die hier jeweils durch entsprechende Betriebsgeräte bzw. EVGs 20 repräsentiert werden, in Gruppen eingeteilt sind. Jede Gruppe ist hierbei einer Steuereinheit 10 zugeordnet, welche die ihr zugeordneten Betriebsgeräte bzw. EVGs 20 durch Übertragung digitaler Steuerbefehle ansteuert. Im dargestellten Ausführungsbeispiel ist eine Signalübertragung entsprechend dem bekannten DALI-Standard und/oder DSI-Standard vorgesehen, selbstverständlich wäre allerdings das erfindungsgemäße Konzept auch auf andere Lösungen zur digitalen Ansteuerung übertragbar.

Die einem Controller bzw. einer Steuereinheit 10 zugeordneten Betriebsgeräte 20 sind also über Datenleitungen 11 an den Ausgang der Steuereinheit 10 angeschlossen. Im Falle der Signalübertragung entsprechend dem DALI-Standard wird also ausgangsseitig jeweils ein lokaler DALI-Bus gebildet, an den die Vorschaltgeräte 20 der jeweiligen Gruppe angeschlossen sind. Entsprechend dem dargestellten Beispiel können bis zu 25 Vorschaltgeräte angeschlossen werden, wobei diese Zahl selbstverständlich auch den jeweiligen Bedürfnissen entsprechend angepasst werden kann.

Eine Besonderheit des erfindungsgemäßen Beleuchtungssystems 1 besteht dabei auch darin, dass einzelne Leuchten drahtlos von der ihr zugeordneten Steuereinheit 10/1 angesteuert werden können. Im dargestellten Ausführungsbeispiel wurden beispielsweise die Vorschaltgeräte 20/4 und 20/5 der ersten Gruppe, also der Steuereinheit 10/1 zugeordnet, während hingegen die Vorschaltgeräte 20/9 und 20/10 der zweiten Gruppe angehören und von der Steuereinheit 10/2 angesteuert werden. Es handelt sich in diesem Fall um Leuchten, welche beispielsweise weiter entfernt von der jeweiligen Steuereinheit 10/1 bzw. 10/2 angeordnet sind oder sich in einer Position befinden, in der das Verlegen der Steuerleitung 11/1 bzw. 11/2 zu dem EVG 20 hin nur sehr aufwändig zu realisieren ist. Aus diesem Grund weist jedes dieser EVGs dann einen entsprechenden Empfänger 30 auf, der dazu ausgebildet ist, drahtlos mit der jeweiligen Steuereinheit 10/1 bzw. 10/2 zu kommunizieren. Dieser Empfänger 30 ist dann ausgangsseitig wiederum über Steuerleitungen 31 mit dem Eingang 21 des zugehörigen Vorschaltgeräts 20 verbunden, so dass dieses in herkömmlicher Weise an seinem Eingang die DALI- oder DSI-Befehle empfängt. Aus Sicht des Vorschaltgeräts 20 ist es also ein regulärer Bestandteil der jeweiligen Gruppe und kann in herkömmlicher Weise - wie auch die Geräte 20/1 bis 20/3 bzw. 20/6 bis 20/8 - mit der zugehörigen Steuereinheit 10/1 bzw. 10/2 kommunizieren, wobei die Datenübermittlung allerdings eben zumindest teilweise über die drahtlose Verbindung zwischen Steuereinheit 10/1 bzw. 10/2 und Drahtlosempfänger 30 erfolgt. Eine Besonderheit kann ferner vorgesehen sein, wenn es sich bei den Vorschaltgeräten 20 um Geräte der Firma Tridonic handelt. Diese Geräte weisen oftmals einen sogenannten Smart-Anschluss 22 auf, der dazu genutzt werden kann, die Stromversorgung des Empfängers 30 durch das EVG 20 sicherzustellen. In diesem Fall kann über den entsprechenden Smart-Anschluss der drahtlos empfangene Befehl auch unmittelbar an das EVG 20 weitergeleitet werden, ohne dass eine Verbindung zu den Eingängen 21 zum Empfangen der DALI- oder DSI-Befehle erforderlich wäre.

Jede Steuereinheit 10/1 bzw. 10/2 ist also dann für die Ansteuerung der ihr zugeordneten Vorschaltgeräte 20 verantwortlich. Es kann in vorteilhafter Weise die Gruppierung der Vorschaltgeräte 20 zu einer Gruppe derart erfolgen, dass diese sich in unmittelbarer Nähe zueinander befinden oder zumindest ein einheitlicher Leuchtenbetrieb sinnvoll ist. Dementsprechend ist vorzugsweise vorgesehen, dass die Steuereinheit 10/1 bzw. 10/2 die jeweiligen EVGs 20 einheitlich, insbesondere im Rahmen sogenannter Broadcast-Befehle ansteuert. D.h., ein ausgangsseitig von der jeweiligen Steuereinheit 10/1 bzw. 10/2 übermittelter DALI- oder DSI-Befehl ist auf alle Vorschaltgeräte 20 der zugehörigen Gruppe gerichtet und wird von diesen einheitlich empfangen und umgesetzt. Dies muss allerdings nicht zwingend bedeuten, dass die jeweils zugehörigen Leuchten auch mit der identischen Helligkeit betrieben werden. Beispielsweise kann ein entsprechend übermittelter Befehl auch die Auswahl einer vorab eingestellten Beleuchtungs-Szene darstellen. In diesem Fall sind in den einzelnen Vorschaltgeräten 20 jeweils für die entsprechende Szene vorab Helligkeitswerte abgelegt, welche vorgegeben, in welcher Weise bzw. mit welcher Helligkeit die Leuchte bei Auswahl einer bestimmten Szene zu leuchten hat. Diese vorab eingestellten Werte können dabei von Leuchte zu Leuchte unterschiedlich sein, so dass also bei Übermitteln eines entsprechenden Szenebefehls die jeweiligen Vorschaltgeräte durchaus auch unterschiedliche Helligkeitswerte einstellen können. Wir hingegen von der Steuereinheit 10/1 bzw. 10/2 unmittelbar ein Helligkeitsstellwert im Broadcast-Modus übermittelt, so führt dies dann dazu, dass alle EVGs die entsprechenden Lichtquellen mit der gleichen Helligkeit, beispielsweise bei 50% der maximalen Helligkeit, betreiben.

Diese gleichartige bzw. einheitliche Ansteuerung aller Betriebsgeräte einer Gruppe hat sich als besonders vorteilhaft herausgestellt, die hier der Aufwand zur Inbetriebnahme des Systems 1 extrem gering ist. Selbstverständlich wäre es allerdings auch denkbar, dass die Steuereinheiten 10/1 bzw. 10/2 die Leuchten individuell unter einer jeweiligen Betriebsadresse ansteuern, wie dies z.B. der DALI-Standard ermöglicht. Hierbei wird allerdings der Aufwand zur Inbetriebnahme des Systems 1 erhöht, da den Leuchten bzw. den Betriebsgeräten dann jeweils vorab einzelne Adressen zugewiesen werden müssen.

Die Steuereinheiten 10/1 bzw. 10/2 generieren hierbei die Steuerbefehle für die zugehörigen Betriebsgeräte 20 auf Basis von Steuerinformationen, die ihnen extern zur Verfügung gestellt werden. Ein wesentlicher Unterschied zu bekannten Beleuchtungssystemen besteht hierbei allerdings darin, dass die Steuereinheiten 10/1 bzw. 10/2 diese Informationen grundsätzlich drahtlos empfangen und dann intern weiterverarbeiten. Dies hat zur Folge, dass - wie der Darstellung von Figur 1 entnehmbar - es nicht erforderlich ist, die Steuereinheiten 10/1 bzw. 10/2 eingangsseitig mit Datenleitungen zur Signalübertragung zu verbinden. Stattdessen ist es lediglich erforderlich, dass die Steuereinheiten 10/1 bzw. 10/2 jeweils eine Schnittstelle 12 zur drahtlosen Kommunikation aufweisen, wobei diese Schnittstelle 12 auch dazu genutzt werden kann, in den oben beschriebenen Sonderfällen drahtlos mit den entsprechenden Vorschaltgeräten bzw. dessen Empfängern 30 zu kommunizieren.

Die Intelligenz zur Verarbeitung der Steuerinformationen in Steuerbefehle ist dabei in den Steuereinheiten 10/1 bzw. 10/2 selbst angesiedelt. D.h., die Steuereinheiten 10/1 bzw. 10/2 selbst erzeugen auf Basis der Steuerinformationen die Steuerbefehle für die EVGs 20 und sind insbesondere auch in der Lage, ergänzende Informationen hinsichtlich äußerer Einflüsse bei der Ansteuerung der Leuchten zu berücksichtigen. Es kann sich hierbei insbesondere um Informationen handeln, die beispielsweise von Anwesenheits- oder Helligkeitssensoren übermittelt werden. In diesem Fall sind beispielsweise dann in den Steuereinheiten 10/1 bzw. 10/2 entsprechende Dimmkurven oder dergleichen hinterlegt, welche festlegen, in welcher Weise auf das von außen einfallende Außenlicht reagiert wird. Auch kann jeweils in den Steuereinheiten 10/1 bzw. 10/2 festgelegt sein, in welcher Weise auf das Erkennen der Anwesenheit von Personen reagiert werden soll.

Zwei Einheiten, die für das Erzeugen und Übermitteln von Steuerinformationen zu den Steuereinheiten 10/1 bzw. 10/2 hin verantwortlich sind, sind also bei dem Ausführungsbeispiel von Figur 1 Sensoren 40, 41, welche die Anwesenheit von Personen erfassen (Sensor 40) bzw. Informationen bzgl. der Helligkeit des Außenlichts zur Verfügung stellen (Sensor 41). Da derartige Sensoren 40, 41 in der Regel an sehr schwer zugänglichen Positionen innerhalb oder außerhalb eines Gebäudes angeordnet sind, ist oftmals das nachträgliche Verlegen von Leitungen zur Stromversorgung zu derartigen Sensoren sehr aufwändig. In diesem Fall ist deshalb vorzugsweise vorgesehen, dass die Sensoren 40, 41 eine eigenständige Energieversorgung, beispielsweise eine Batterie oder dergleichen aufweisen. Im Falle von Außenlichtsensoren könnten selbstverständlich auch Solarzellen oder dergleichen als Energiequellen genutzt werden.

Darüber hinaus weist das System 1 allerdings auch andere Einheiten auf, über welche Informationen an die Steuereinheiten 10/1 bzw. 10/2 übermittelt werden. Es kann sich hierbei um klassische Bedienelemente 42, 43 wie Lichtschalter, Dimmer und dergleichen handeln, welche entweder fest installiert sind oder in Form tragbarer Bedieneinheiten zur Verfügung stehen. Unabhängig davon übermitteln auch diese Einheiten 42, 43 die bei Betätigung durch einen Benutzer erzeugten Informationen drahtlos an die Steuereinheiten 10/1 bzw. 10/2.

Ferner ist in Figur 1 ein weiteres Bedienelement 44 dargestellt, welches beispielsweise in einfacher Weise das Aufrufen der zuvor bereits erwähnten verschiedenen Beleuchtungsszenen ermöglicht. Dieses Element 44 weist mehrere Taster 45 auf, welche bei Betätigung jeweils die Auswahl einer bestimmten Beleuchtungsszene signalisieren, wobei diese Taster 45 dann auch mit entsprechenden Lichtquellen hinterlegt sind, um durch entsprechendes Beleuchten die Auswahl einer bestimmten Szene anzuzeigen. Hierbei kann nun vorgesehen sein, dass sich mehrere derartiger Bedienelemente 44 innerhalb eines Raums oder eines Bereichs befinden, wobei dann vorzugsweise die von einem derartigen Bedienelement 44 an die Steuereinheiten 10/1 bzw. 10/2 übermittelten Informationen auch untereinander ausgetauscht werden und dementsprechend alle Bedienelemente 44 jeweils die gleiche Anzeige vornehmen. Hierdurch wird eine einheitliche Anzeige der ausgewählten Beleuchtungsszene an den Bedienelementen 44 sichergestellt.

Schließlich können Steuerinformationen auch noch von zwei weiteren Einheiten generiert werden, wobei diese Einheiten in erster Linie zum Implementieren des gesamten Systems 1 verwendet werden. Mithilfe einer sogenannten Setup-Box 46 beispielsweise kann den Steuereinheiten 10/1 bzw. 10/2 jeweils mitgeteilt werden, welcher Gruppe sie zugeordnet wurden und/oder in welcher Weise sie auf das Eintreffen von Signalen, die von den Sensoren 40, 41 stammen, zu reagieren haben. Auch das Übermitteln der vorab entsprechenden Helligkeitswerte für die verschiedenen Beleuchtungsszenen kann über diese Setup-Box 46 erfolgen. In gleicher Weise könnte allerdings auch eine entsprechende Konfiguration des Systems 1 durch ein tragbares Gerät 47 erfolgen, welches insbesondere unter Nutzung einer graphischen Benutzeroberfläche eine besonders einfache und anschauliche Konfiguration erlaubt.

Abgesehen von den von diesen, auf der linken Seite von Figur 1 dargestellten Einheiten stammenden Steuerinformationen können allerdings die Steuereinheiten 10/1 bzw. 10/2 auch untereinander Informationen austauschen. Dies kann insbesondere dazu dienen, den einheitlichen Betrieb des gesamten Systems 1 zu gewährleisten. Wird beispielsweise durch eines der Bedienelemente ein Befehl zur Auswahl einer Helligkeitsszene übermittelt, so kann dieser Befehl durch die Einheiten 10/1 bzw. 10/2 untereinander im Rahmen einer sog. Repeater-Funktion weitergeleitet werden, um auf diesem Wege sicherzustellen, dass dieser Befehl auch tatsächlich von allen Steuereinheiten 10/1 bzw. 10/2 des Systems 1 empfangen wurde.

Letztendlich ist also erkennbar, dass das erfindungsgemäße System 1 alle Möglichkeiten der komfortablen Helligkeitssteuerung bietet, allerdings der Aufwand zum Verdrahten der Einheiten untereinander insbesondere über Leitungen zur Signalübermittlung deutlich reduziert wird.

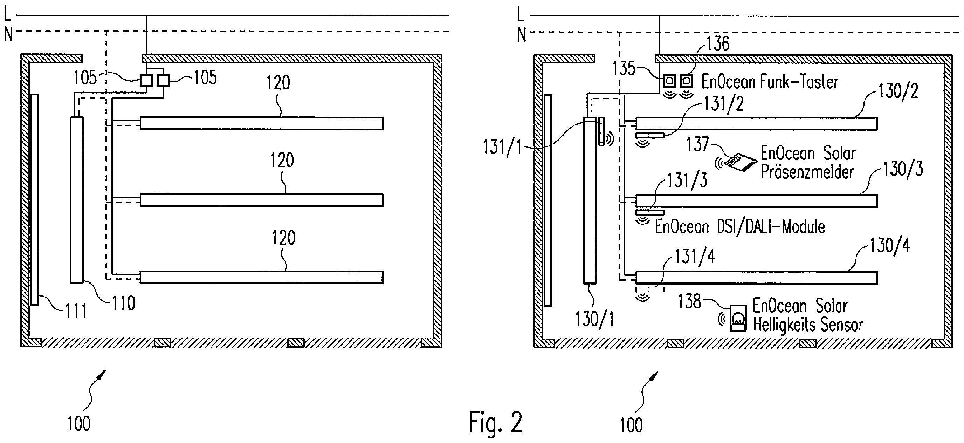

Der Vorteil des erfindungsgemäßen Systems wird dabei anhand eines Beispiels, welches in Figur 2 dargestellt ist, besonders deutlich. So zeigt die linke Seite von Figur 2 zunächst die herkömmliche Beleuchtung beispielsweise in einem Klassenzimmer 100, welche lediglich auf einer konventionellen Verdrahtung der verschiedenen Leuchten beruht und mit Hilfe einfacher Schalter 105 das voneinander getrennte Ein- und Ausschalten einerseits von Leuchten 110, die sich im vorderen Bereich in der Nähe der Tafel 111 befinden, und andererseits von drei sich in Längsrichtung erstreckenden Lichtbändern 120 ermöglicht. Gegebenenfalls könnte hier auch ein Dimmen vorgesehen sein.

Soll nun allerdings eine komfortable Beleuchtungssteuerung ermöglicht werden, die das Aufrufen vorab eingestellter Szenen (beispielsweise Präsentation, Unterricht, usw.) sowie das Einbinden von durch Sensoren zur Verfügung gestellten Informationen ermöglicht, so müsste entsprechend den bisherigen Lösungen eine zusätzliche Verdrahtung sämtlicher Leuchten mithilfe von Datenleitungen vorgenommen werden.

Entsprechend der erfindungsgemäßen Lösung kann allerdings auch eine Umrüstung vorgenommen werden, so dass sich die auf der rechten Seite von Figur 2 dargestellte Ausgestaltung ergibt. Dabei werden insgesamt vier Gruppen 130/1 bis 130/4 gebildet, die einerseits der Tafelbeleuchtung und andererseits den drei sich in Längsrichtung erstreckenden Lichtbändern entsprechen. Jede Gruppe 130/1 bis 130/4 beinhaltet dabei eine Steuereinheit 131/1 bis 131/4, welche die Leuchten der zugehörigen Gruppe in entsprechender Weise ansteuert. Da die Leuchten einer Gruppe ohnehin jeweils ein eigenes Lichtband bilden und dementsprechend üblicherweise ein gemeinsames Trägerelement oder sogar ein gemeinsames Gehäuse aufweisen, ist der Aufwand zum Anschließen der Leuchten einer Gruppe an das jeweilige Steuergerät verhältnismäßig einfach durchzuführen. Es ist allerdings nicht erforderlich, dass die Steuereinheiten 131/1 bis 131/4 jeweils zusätzlich mit externen Einheiten über Datenleitungen verbunden sind. Stattdessen erfolgt nunmehr die Ansteuerung mithilfe zweier Taster bzw. Bedienelemente 135, 136, welche per Funk entsprechende Informationen an die Steuereinheiten 131/1 bis 131/4 übermitteln. Ferner können nunmehr in einfacher Weise auch vollständig unabhängig versorgte Sensoren 137 und 138 in das System integriert werden, um eine automatisierte Ansteuerung zu ermöglichen.

Dieses Beispiel zeigt sehr deutlich, dass mit Hilfe der erfindungsgemäßen Lösung in sehr einfacher Weise und mit geringem Aufwand der Komfort bei der Ansteuerung von Leuchten deutlich erhöht werden kann.

Die drahtlose Kommunikation zwischen den verschiedenen Einheiten des Systems erfolgt dabei vorzugsweise entsprechend einem Standard, der einen sehr einfachen und energiearmen Kommunikationsaufbau ermöglicht. Es hat sich hierbei insbesondere der bekannte Bluetooth-Standard, vorzugsweise der Standard 4.0 oder eine Kommunikation mittels Bluetooth low energy als sinnvoll herausgestellt. Vorzugsweise ist dabei die Kommunikation derart gestaltet, dass sie lediglich innerhalb eines bestimmten Bereichs, vorzugsweise innerhalb eines Raums, stattfindet. Gleichartige Systeme können sich dann in benachbarten Räumen befinden wobei sichergestellt ist, dass die drahtlose Kommunikation der Einheiten innerhalb eines Raums die Kommunikation der Einheiten in einem anderen Raum nicht beeinträchtigt.

## Patentansprüche

1. Beleuchtungssystem (1) mit zumindest einer Steuereinheit (10) und mehreren der Steuereinheit (10) zugeordneten Betriebsgeräten (20) sowie zumindest einem Sensor (40, 41), wobei die Steuereinheit (10) mit den ihr zugeordneten Betriebsgeräten (20) über eine Datenleitung (11) verbunden und dazu ausgebildet ist, den Betriebsgeräten (20) individuell unter einer jeweiligen Betriebsadresse Steuerbefehle zu übermitteln, wobei die Steuerbefehle auf Basis von der Steuereinheit (10) zugeführten Steuerinformationen generiert werden,
wobei die Steuereinheit (10) die Steuerinformationen drahtlos empfängt, wobei die der Steuereinheit (10) zugeführten Steuerinformationen zumindest teilweise von dem Sensor (40, 41), insbesondere in Form eines Anwesenheits- oder Helligkeitssensors stammen,
**dadurch gekennzeichnet,**
**dass** die Steuerbefehle dem DALI- und/oder DSI-Standard entsprechen,
und **dass** der Sensor (40, 41) eine eigenständige Energieversorgung in Form einer Batterie oder einer Solarzelle aufweist,
wobei das Beleuchtungssystem (1) mehrere Bedienelemente (42-44) aufweist, wobei zumindest einige der Bedienelemente (42-44) dazu ausgebildet sind, drahtlos Informationen bzgl. der an die Steuereinheit (10) übermittelten Steuerinformationen auszutauschen, und wobei die Bedienelemente (42-44) dazu ausgebildet sind, den aktuellen Zustand des Beleuchtungssystems anzuzeigen.

2. Beleuchtungssystem nach einem der vorherigen Ansprüche,
**dadurch gekennzeichnet,**
**dass** die Steuereinheit (10) an zumindest ein weiteres ihr zugeordnetes Betriebsgerät (20) die Steuerbefehle drahtlos übermittelt.

3. Beleuchtungssystem nach einem der vorherigen Ansprüche,
**dadurch gekennzeichnet,**
**dass** dieses mehrere Steuereinheiten (10) aufweist, denen jeweils eine Gruppe von Betriebsgeräten (20) zugeordnet ist, wobei die einer Steuereinheit (10) zugeführten Steuerinformationen zumindest teilweise auch von einer der anderen Steuereinheiten (10) stammen.

4. Beleuchtungssystem nach einem der vorherigen Ansprüche,
**dadurch gekennzeichnet,**
**dass** die der Steuereinheit (10) zugeführten Steuerinformationen zumindest teilweise von einem durch einen Benutzer zu betätigenden Bedienelement (42-44) stammen.

5. Beleuchtungssystem nach einem der vorherigen Ansprüche,
**dadurch gekennzeichnet,**
**dass** die drahtlose Kommunikation der Steuereinheit (20) auf Basis einer Bluetooth-Kommunikation, vorzugsweise entsprechend dem Bluetooth-Standard 4.0 oder mittels Bluetooth low energy erfolgt.

6. Verfahren zum Ansteuern von Betriebsgeräten (20) in einem Beleuchtungssystem (1) mit Hilfe einer Steuereinheit (10), welche über eine Datenleitung (11) mehreren ihr zugeordneten Betriebsgeräten (20) individuell unter einer jeweiligen Betriebsadresse Steuerbefehle zu übermitteln, wobei die Steuerbefehle auf Basis von der Steuereinheit (10) zugeführten Steuerinformationen generiert werden,
wobei die Steuerinformationen drahtlos an die Steuereinheit (10) übermittelt werden, wobei die der Steuereinheit (10) zugeführten Steuerinformationen zumindest teilweise von einem Sensor (40, 41), insbesondere von einem Anwesenheits- oder Helligkeitssensor stammen
**dadurch gekennzeichnet,**
**dass** die Steuerbefehle dem DALI- und/oder DSI-Standard entsprechen,
und **dass** der Sensor (40, 41) eine eigenständige Energieversorgung in Form einer Batterie oder einer Solarzelle aufweist,
wobei das Beleuchtungssystem (1) mehrere Bedienelemente (42-44) aufweist, wobei zumindest einige der Bedienelemente (42-44) drahtlos Informationen bzgl. der an die Steuereinheit (10) übermittelten Steuerinformationen austauschen, und wobei die Bedienelemente (42-44) den aktuellen Zustand des Beleuchtungssystems anzeigen.

## Claims

1. A lighting system (1) having at least one control unit (10), and a plurality of operating devices (20) associated with the control unit (10), and at least one sensor (40, 41), wherein the control unit (10) is connected to the operating devices (20) associated therewith via a data line (11) and is designed to transmit control commands to the operating devices (20) individually at a respective operating address,
wherein the control commands are generated on the basis of control information supplied by the control unit (10),
wherein the control unit (10) wirelessly receives the control information, wherein the control information supplied to the control unit (10) originates at least partially from the sensor (40, 41), in particular in the form of a presence or brightness sensor,
**characterized in that**
the control commands correspond to the DALI and/or DSI standard,
and **in that** the sensor (40, 41) has an independent power supply in the form of a battery or a solar cell,
wherein the lighting system (1) has a plurality of operating elements (42-44), wherein at least some of the operating elements (42-44) are designed to wirelessly exchange information regarding the control information transmitted to the control unit (10), and wherein the operating elements (42-44) are designed to display the current state of the lighting system.

2. Lighting system according to any one of the preceding claims,
**characterized in that**
the control unit (10) wirelessly transmits the control commands to at least one further operating device (20) associated therewith.

3. Lighting system according to any one of the preceding claims,
**characterized in that**
this system has a plurality of control units (10) with which a group of operating devices (20) is respectively associated, wherein the control information supplied to a control unit (10) also originates at least partially from one of the other control units (10).

4. Lighting system according to any one of the preceding claims,
**characterized in that**
the control information supplied to the control unit (10) originates at least partially from an operating element (42-44) that is to be actuated by a user.

5. Lighting system according to any one of the preceding claims,
**characterized in that**
the wireless communication of the control unit (20) is carried out on the basis of a Bluetooth communication, preferably according to the Bluetooth 4.0 standard or by means of Bluetooth Low Energy.

6. Method for controlling operating devices (20) in a lighting system (1) with the aid of a control unit (10) which, via a data line (11), to transmit control commands individually to a plurality of operating devices (20) associated therewith at a respective operating address, wherein the control commands are generated on the basis of control information supplied by the control unit (10), wherein the control information is transmitted wirelessly to the control unit (10), wherein the control information supplied to the control unit (10) originates at least partially from a sensor (40, 41), in particular from a presence or brightness sensor
**characterized in that**
the control commands correspond to the DALI and/or DSI standard,
and **in that** the sensor (40, 41) has an independent power supply in the form of a battery or a solar cell,
wherein the lighting system (1) has a plurality of operating elements (42-44), wherein at least some of the operating elements (42-44) wirelessly exchange information regarding the control information transmitted to the control unit (10), and wherein the operating elements (42-44) indicate the current state of the lighting system.

## Revendications

1. Système d'éclairage (1) comprenant au moins un module de commande (10) et plusieurs appareils de service (20) associés au module de commande (10) ainsi qu'au moins un capteur (40, 41), le module de commande (10) étant reliée aux appareils de service (20) qui lui sont associés par le biais d'une ligne de données (11) et étant conçue pour transmettre aux appareils de service (20) individuellement des ordres de commande à une adresse de service respective,
les ordres de commande étant générés sur la base d'informations de commande fournies par le module de commande (10),
le module de commande (10) recevant les informations de commande sans fil, les informations de commande fournies au module de commande (10) provenant au moins partiellement du capteur (40, 41), en particulier sous la forme d'un capteur de présence ou de luminosité,
**caractérisé en ce**
**que** les ordres de commande correspondent à la norme DALI et/ou DSI, **et en ce que** le capteur (40, 41) présente une alimentation en énergie indépendante sous la forme d'une batterie ou d'une cellule solaire,
le système d'éclairage (1) présentant plusieurs éléments d'actionnement (42-44), au moins certains des éléments d'actionnement (42-44) étant conçus pour échanger sans fil des informations concernant les informations de commande transmises au module de commande (10) et les éléments d'actionnement (42-44) étant conçus pour afficher l'état réel du système d'éclairage.

2. Système d'éclairage selon l'une quelconque des revendications précédentes,
**caractérisé en ce**
**que** le module de commande (10) transmet sans fil les ordres de commande à au moins un autre des appareils de service (20) qui lui sont associés.

3. Système d'éclairage selon l'une quelconque des revendications précédentes,
**caractérisé en ce**
**que** celui-ci présente plusieurs modules de commande (10), auxquelles respectivement un groupe d'appareils de service (20) est attribué, les informations de commande fournies à un module de commande (10) provenant au moins partiellement également d'une des autres modules de commande (10).

4. Système d'éclairage selon l'une quelconque des revendications précédentes,
**caractérisé en ce**
**que** les informations de commande fournies au module de commande (10) proviennent au moins partiellement d'un élément d'actionnement (42-44) à actionner par un utilisateur.

5. Système d'éclairage selon l'une quelconque des revendications précédentes,
**caractérisé en ce**
**que** la communication sans fil du module de commande (20) est effectuée sur la base d'une communication Bluetooth, correspondant de préférence à la norme Bluetooth 4.0 ou au moyen de Bluetooth low energy.

6. Procédé de commande d'appareils de service (20) dans un système d'éclairage (1) à l'aide d'un module de commande (10), qui transmet par le biais d'une ligne de données (11) individuellement à plusieurs appareils de service (20) qui lui sont associés des ordres de commande à une adresse de service respective, les ordres de commande étant générés sur la base d'informations de commande fournies par le module de commande (10),
les informations de commande étant transmises sans fil au module de commande (10), les informations de commande fournies au module de commande (10) provenant au moins partiellement d'un capteur (40, 41), en particulier sous la forme d'un capteur de présence ou de luminosité
**caractérisé en ce**
**que** les ordres de commande correspondent à la norme DALI et/ou DSI,
**et en ce que** le capteur (40, 41) présente une alimentation en énergie indépendante sous la forme d'une batterie ou d'une cellule solaire,
le système d'éclairage (1) présentant plusieurs éléments d'actionnement (42-44), au moins certains des éléments d'actionnement (42-44) échangeant sans fil des informations concernant les informations de commande transmises au module de commande (10) et les éléments d'actionnement (42-44) affichant l'état réel du système d'éclairage.
